(19) Europäisches Patentamt
European Patent Office
Office européen des brevets

(11) Publication number: **0 235 888 A1**

(12) **EUROPEAN PATENT APPLICATION**

(21) Application number: **87300368.5**

(22) Date of filing: **16.01.87**

(51) Int. Cl.⁴: **C 08 G 18/46**, C 08 G 18/60, C 08 G 18/10, C 08 G 18/66, C 08 G 18/14

(30) Priority: **05.02.86 GB 8602802**

(43) Date of publication of application: **09.09.87 Bulletin 87/37**

(84) Designated Contracting States: **AT BE CH DE ES FR GB IT LI NL SE**

(71) Applicant: **IMPERIAL CHEMICAL INDUSTRIES PLC, Imperial Chemical House Millbank, London SW1P 3JF (GB)**

(72) Inventor: **Bagaglio, Gian Carlo, Avenue Chateau de Walzin 6, B-1180 Brussels (BE)**
Inventor: **Bentley, James Martin, Bleuckeveldlaan 14, B-1980 Tervuren (BE)**
Inventor: **Brown, James Peter, Stijn Streuvelslaan 9, B-1960 Sterrebeek (BE)**

(74) Representative: **Leherte, Georges Maurice Lucien Marie et al, Imperial Chemical Industries PLC Legal Department: Patents P.O. Box 6, Welwyn Garden City Herts. AL7 1HD (GB)**

(54) **Microcellular elastomers.**

(57) The invention relates to a method for the preparation of a microcellular polyurethane elastomer which comprises interacting:

(a) an organic diisocyanate

(b) a polyester polyol having a hydroxyl number in the range 28–112 being a reaction product of an aliphatic dicarboxylic acid, a glycol and a di- or trialkanolamine of the formula:

$$R{-}N(AOH)_2$$

wherein A represents an alkylene radical containing 2–4 carbon atoms and R represents hydrogen or a further –AOH radical,

(c) a difunctional chain extender, and

(d) a blowing agent, the di- or tri-alkanolamine content of the polyester being at least 0.02 mole percent with respect to the total amount of glycol and di- or trialkanolamine.

EP 0 235 888 A1

This invention relates to microcellular elastomers and more particularly to a method for the preparation of microcellular polyurethane elastomers.

It is well known to manufacture microcellular polyurethane elastomers, especially for shoe-soling applications, by the interaction of a number of difunctional components. Thus, in one type of formulation, an organic diisocyanate, which may be in the form of a prepolymer, is reacted with a polyester diol and a low molecular weight diol such as 1,4-butanediol as chain extender, the reaction being performed in the presence of catalysts, surface active agents and a blowing agent, for example water.

It is appreciated by those skilled in the art that polyurethanes made from essentially difunctional components can, nevertheless, contain cross-links because of secondary reactions, for example the reaction of diisocyanates or isocyanate-terminated polymer chains with the urethane and urea groups formed in the primary reactions. The introduction of a higher cross-link density by the deliberate use of higher functionality components, for example branched polyesters, can at certain levels have a generally deleterious effect on elastomer properties, for example tear and tensile strengths and abrasion resistance.

At a lower level, however, the introduction of higher functionality components into an otherwise difunctional system can have advantageous effects.

Thus United Kingdom Patent Specification No. 1478045 describes a process for the manufacture of moulded flexible cellular polyurethane articles, especially microcellular elastomers, from a reaction mixture in which at least one of the reactants has a functionality greater than two, the overall functionality being defined in terms of the degree of branching present in the final polyurethane. The higher functionality component can be a polyester polyol, a polyisocyanate or a non-polymeric cross-linking agent. Suitable polyesters are said to be obtained by including a branching component in the polyester-forming reaction mixture, the branching components mentioned being glycerol, trimethylolpropane, pentaerythritol and trimesic acid. The effect of the higher functionality component is to enable the elastomers to be removed from the moulds in a shorter time than is the case for elastomers made from wholly difunctional components. Additionally, the increased functionality generally improves the humid ageing resistance of the elastomer.

It has now been found that a significant improvement in the flex fatigue properties of the elastomers over a wide NCO/OH mixing ratio range can be achieved by the use of a polyester polyol containing residues of a di-or tri-alkanolamine.

Accordingly, the invention provides a method for the preparation of a microcellular polyurethane elastomer which comprises interacting :

(a) an organic diisocyanate

(b) a polyester polyol having a hydroxyl number in the range 28-112 being a reaction product of an aliphatic dicarboxylic acid, a glycol and a di-or tri-alkanolamine of the formula :

$$R\text{-}N(AOH)_2$$

wherein A represents an alkylene radical containing 2-4 carbon atoms and R represents hydrogen or a further -AOH radical,

(c) a difunctional chain extender, and (d) a blowing agent, the di- or trialkanolamine content of the polyester being at least 0.02 mole percent with respect to the total amount of glycol and di- or trialkanolamine.

The organic diisocyanate is preferably an aromatic diisocyanate, for example 4,4'-diphenylmethane diisocyanate

and its mixtures with the 2,4'-isomer. In making the elastomer, the diisocyanate, especially when solid at ambient temperatures, may be used in the form of a prepolymer obtained in known manner by reacting the diisocyanate with a stoichiometric deficiency of a polyester polyol or one or more low molecular weight diols.

The polyester polyol may be prepared in conventional manner by reacting one or more aliphatic and for aromatic dicarboxylic acids, for example adipic, glutaric, succinic, isophthalic and terephthalic acids, or their ester-forming derivatives, for example their dimethyl esters, with one or more aliphatic, cycloaliphatic or heterocyclic glycols, for example ethylene glycol, propylene glycol, diethylene glycol, 1,4-butanediol, 1,5-pentanediol, 1,6-hexanediol 1,4-cyclohexanedimethanol and 2,5-bis-hydroxymethylfuran and a di- or tri-alkanolamine, for example diethanolamine, di-isopropanolamine, tri-isopropanolamine and, especially, triethanolamine. The melting point of the polyester should not exceed 50 degrees Celsius and the viscosity at 100 degrees Celsius should not exceed 10 poises.

The polyester polyol containing di- or tri-alkanolamine residues may be the sole polyester in the formulation or,

alternatively, it may be used in conjunction with a polyester diol containing no di- or tri-alkanolamine residues. Furthermore, as indicated above, a portion of polyester, which may or may not contain di- or tri-alkanolamine residues, may be pre-polymerised with the diisocyanate. The overall polyester hydroxyl number is preferably in the range 45 - 65 and the overall di- or tri-alkanolamine content is preferably such that the polyurethane product contains from 0.006 to 0.025 branch point per 1000 units of molecular weight additional to the branching present when wholly difunctional components are used. A suitable level of di-or/tri-alkanolamine is generally in the range from 0.2 to 1.0, preferably from 0.3 to 0.8 mole per cent based on the total glycols and alkanolamines in the polyester or polyesters used.

The difunctional chain extender is suitably a low molecular weight aliphatic, cycloaliphatic or heterocyclic diol, for example ethylene glycol or 1,4- butanediol, or a low molecular weight diamine.

Suitable blowing agents include water and inert volatile liquids such as trichlorofluoroamethane, the amount being selected in known manner to provide an elastomer of the desired density.

In addition to the components already mentioned, the elastomer-forming reaction mixture may also contain other conventional ingredients of such systems. In particular, it may contain catalysts, for example tertiary amines and tin compounds, surfactants, for example siloxane-oxyalkylene copolymers and oxyethylated alkylphenols, flame-retardants, fillers and pigments.

The components of the reaction mixture may be mixed together in any convenient manner, for example by using any of the equipment described in the prior art for the purpose. If desired some of the individual components may be pre-blended so as to reduce the number of component streams requiring to be brought together in the final mixing step. It is often convenient to have a two-stream system whereby one stream comprises a prepolymer and the second stream comprises all the other components of the reaction mixture. In preferred formulations, one stream comprises a prepolymer of diphenylmethane diisocyanate and a polyester diol, the other stream comprising a polyester containing triethanolamine residues, 1,4-butanediol and/or ethylene glycol as chain extender, water as blowing agent together with catalyst and surfactant.

The method of the invention is particularly useful for the production of shoe soles. For that purpose, the reaction mixture may be introduced into moulds corresponding in size and shape with the desired products, the overall density being varied in known manner by varying the amount of blowing agent and the degree of overpacking. The microcellular products may have densities in the range 0.3 - 1.0 g/$cm^3$.

The invention is illustrated but not limited by the following Example in which all parts and percentages are by weight unless otherwise indicated.

Example

-------

Preparation of Polyesters

Polyester A having a hydroxyl value of 55.6 mg KOH/g and an acid value of 0.4 mg KOH was prepared in conventional manner by reacting 10.64 moles of adipic acid with 7.76 moles of ethylene glycol and 3.88 moles of 1,4-butanediol.

Polyester B was prepared by reacting 3858 parts of adipic acid, 1182 parts of ethylene glycol, 850 parts of 1,4-butanediol, 111 parts of triethanolamine and 0.22 part of tetrabutyl o-titanate in a nitrogen atmosphere at temperatures up to 210 degrees Celsius. The product was solid at ambient temperature and had a hydroxyl value of 53.1 mg KOH/g, an acid value of 0.48 mg KOH/g and a viscosity of 393 cs at 100 degrees Celsius.

Polyester C having a hydroxyl value of 55.3 mg KOH/g, an acid value of 0.46 mg KOH/g and a viscosity of 346 cs at 100 degrees Celsius was prepared in conventional manner by reacting 10.64 moles of adipic acid with 7.46 moles of ethylene glycol, 3.73 moles of 1,4 -butanediol and 0.30 mole of trimethylolpropane.

Preparation of Prepolymers

Prepolymer X having an NCO content of 18.52 % was prepared by reacting 60.11 parts of 4,4'-diphenylmethane diisocyanate with 39.84 parts of Polyester A.

Prepolymer Y having an NCO content of 18.70 % was prepared by reacting 59.21 parts of 4,4'-diphenylmethane diisocyanate and 1.50 parts of crude MDI (NCO content 29.2 %) containing approximately 55% of diphenylmethane diisocyanate, the bulk of the remainer being polymethylene polyphenyl polyisocyanates of functionality greater than two with 39.29 parts of Polyester A.

Preparation of Elastomers

Microcellular elastomers were prepared under conventional conditions from formulations 1-9 described in Table 1. The quantities quoted are in parts by weight. The formulations were designed to give elastomers having one theoretical branch point per 81000 units of molecular weight.
Physical properties are given in Table 2. Testing was carried out under uniform conditions on the same day to provide a valid comparison of the formulations used.
The cream time, gel time, tack free time, tear resistance time, free rise density and moulding resilience were substantially comparable for all formulations.

| Formulation | 1 | 2 | 3 | 4 | 5 | 6 | 7 | 8 | 9 |
|---|---|---|---|---|---|---|---|---|---|
| Polyester A | 65.9 | 65.9 | 65.9 | 85.1 | 85.1 | 85.1 | 65.9 | 65.9 | |
| Polyester B | 19.2 | 19.2 | 19.2 | | | | | | |
| Polyester C | | | | | | | 19.2 | 19.2 | |
| 1,4-Butanediol | 13.5 | 13.5 | 13.5 | 13.5 | 13.5 | 13.5 | 13.5 | 13.5 | |
| Water | 0.4 | 0.4 | 0.4 | 0.4 | 0.4 | 0.4 | 0.4 | 0.4 | |
| DABCO | 0.5 | 0.5 | 0.5 | 0.5 | 0.5 | 0.5 | 0.5 | 0.5 | |
| Silicone DC 190 | 0.5 | 0.5 | 0.5 | 0.5 | 0.5 | 0.5 | 0.5 | 0.5 | |
| Prepolymer X | 94 | 96 | 98 | | | | 94 | 96 | 98 |
| Prepolymer Y | | | | 92 | 94 | 96 | | | |

| Formulation | 1 | 2 | 3 | 4 | 5 | 6 | 7 | 8 | 9 |
|---|---|---|---|---|---|---|---|---|---|
| Test Sheet density (kg/m3) | 605 | 600 | 600 | 600 | 600 | 600 | 610 | 618 | 605 |
| Hardness (Sh°A | 66 | 67 | 69 | 66 | 66 | 68 | 69 | 71 | 71 |
| Tensile Strength (MPa) | | | | | | | | | |
| at 100% Elongation | 2.2 | 2.2 | 2.3 | 2.0 | 2.1 | 2.1 | 2.4 | 2.3 | 2.4 |
| at 200% Elongation | 3.2 | 3.3 | 3.5 | 2.9 | 3.2 | 3.3 | 3.5 | 3.4 | 3.8 |
| at 300% Elongation | 4.7 | 5.2 | 5.7 | 4.2 | 4.9 | 5.2 | 5.3 | 5.2 | 6.3 |
| at break | 9.2 | 9.2 | 9.7 | 9.5 | 9.6 | 9.4 | 10.0 | 9.2 | 9.6 |
| E/B (%) | 430 | 390 | 385 | 480 | 415 | 390 | 415 | 400 | 365 |
| Tear Strength (N/mm) | 22.0 | 18.7 | 18.8 | 17.1 | 15.4 | 12.9 | 21.2 | 16.6 | 17.4 |
| Abrasion Resistance(mg) | 190 | 88 | 80 | 186 | 112 | 87 | 102 | 82 | 78 |
| Pirmasens Flex measurements * : | | | | | | | | | |
| Cut growth at 30 Kc (%) | 5 | 20 | 25 | 35 | - | - | 30 | - | - |
| Cycles at break (Kc) | - | - | - | - | 25 | 20 | - | 28 | 16 |
| Max tan δ temperature (degrees Celsius) | | -19 | | | -16 | | | -15 | |
| Tensile strength Retention (%) after 168 h. ageing at 70 Deg. C at 100 % RH | | | | | | | | | |
| at 300% Elongation | | 79.0 | | | 78 | | | 79 | |
| at break | | 90.2 | | | 70 | | | 84 | |
| E/B (%) | | 475 | | | 512 | | | 495 | |
| Tensile Strength Retention (%) after 120 h. ageing at 80 Deg. C at 100 % RH | | | | | | | | | |
| at 300% Elongation | | 65.4 | | | - | | | 73 | |
| at break | | 50.4 | | | 22 | | | 67 | |
| E/B (%) | | 436 | | | 270 | | | 500 | |

* according to the method DIN 53522

CLAIMS

1. A method for the preparation of a microcellular polyurethane elastomer which comprises interacting :

(a) an organic diisocyanate

(b) a polyester polyol having a hydroxyl number in the range 28-112 being a reaction product of an aliphatic dicarboxylic acid, a glycol and a di-or trialkanolamine of the formula :

$$R\text{-}N(AOH)_2$$

wherein A represents an alkylene radical containing 2-4 carbon atoms and R represents hydrogen or a further -AOH radical,

(c) a difunctional chain extender, and

(d) a blowing agent,

the di-or tri-alkanolamine content of the polyester being at least 0.02 mole percent with respect to the total amount of glycol and di- or trialkanolamine.

2. A method according to claim 1 wherein the tri-alkanolamine is triethanolamine.

3. A method according to claim 1 or claim 2 wherein the di- or tri-alkanolamine content of the polyester is between 0.2 and 1.0 mole percent with respect to the total amount of glycol and di- or trialkanolamine.

4. A method according to claim 1 or claim 2 wherein the di- or tri-alkanolamine content of the polyester is between 0.3 and 0.8 mole percent with respect to the total amount of glycol and di- or trialkanolamine.

5. A method according to any one of claims 1-4 wherein a prepolymer of diphenylmethane diisocyanate and a polyester diol is reacted with a polyol composition comprising a polyester containing triethanolamine residues, 1,4-butanediol and/or ethylene glycol as chain extender, water as blowing agent together with catalyst and surfactant.

European Patent Office

# EUROPEAN SEARCH REPORT

0 235 888

EP 87 30 0368

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 258 140 (H. HORACEK et al.)<br>* Claims 1-3; column 2, lines 44-58; column 3, lines 8-24; column 5, lines 11-33; tables 2,4 *<br>--- | 1-5 | C 08 G 18/46<br>C 08 G 18/60<br>C 08 G 18/10<br>C 08 G 18/66<br>C 08 G 18/14 |
| Y | FR-A-2 253 037 (ICI)<br>* Claims 1,2,6; page 6, lines 11-19; page 8, lines 20-30 * & GB-A-1 478 045 (Cat. D)<br>--- | 1-5 | |
| A | US-A-4 123 422 (J.A. ERIKSON et al.)<br>* Claims 1-6; column 3, line 51 - column 4, line 6 *<br>--- | 1 | |
| A | US-A-3 591 532 (L.W. ABERCROMBIE et al.)<br>* Claims 1-3; column 7, lines 9-57; column 8, line 53 - column 9, line 10 *<br>----- | 1 | TECHNICAL FIELDS SEARCHED (Int. Cl.4)<br>C 08 G |

The present search report has been drawn up for all claims

| Place of search | Date of completion of the search | Examiner |
|---|---|---|
| THE HAGUE | 21-05-1987 | VAN PUYMBROECK M.A. |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document